Europäisches Patentamt

European Patent Office

Office européen des brevets

(11) Veröffentlichungsnummer: **0 198 377**
**B1**

(12) **EUROPÄISCHE PATENTSCHRIFT**

(45) Veröffentlichungstag der Patentschrift: **30.01.91**

(51) Int. Cl.⁵: **C 04 B 41/87**

(21) Anmeldenummer: **86104697.7**

(22) Anmeldetag: **07.04.86**

(54) **Verfahren zur Herstellung eines fleckensicheren, insbesondere plattenförmigen keramischen Formkörpers und nach dem Verfahren hergestellter Formkörper.**

(30) Priorität: **17.04.85 DE 3513868**
**17.04.85 DE 3513871**

(43) Veröffentlichungstag der Anmeldung:
**22.10.86 Patentblatt 86/43**

(45) Bekanntmachung des Hinweises auf die
Patenterteilung:
**30.01.91 Patentblatt 91/05**

(84) Benannte Vertragsstaaten:
**AT BE CH DE FR GB IT LI LU NL SE**

(56) Entgegenhaltungen:
**FR-A-1 248 057**
**GB-A- 539 957**
**US-A-4 155 788**

(73) Patentinhaber: **Buchtal Gesellschaft mit
beschränkter Haftung
Buchtalweg
D-8472 Schwarzenfeld(Opf.) (DE)**

(72) Erfinder: **Bard, Martin
Seminargasse 26
D-8450 Amberg (DE)**

(74) Vertreter: **Bockhorni, Josef, Dipl.-Ing. et al
Herrmann-Trentepohl, Kirschner, Grosse,
Bockhorni & Partner Forstenrieder Allee 59
D-8000 München 71 (DE)**

Courier Press, Leamington Spa, England.

**Beschreibung**

Die Erfindung betrifft ein Verfahren zur Herstellung eines auf seiner Sichtseite fleckensicheren, insbesondere plattenförmigen Formkörpers aus gebranntem keramischen Material sowie einen nach diesem Verfahren hergestellten Formkörper.

Es ist bekannt, keramische Formkörper, insbesondere plattenförmige keramische Formkörper zum Schutz gegen Abrieb und Abnutzung mit einer Engobe zu versehen. Bei Engoben handelt es sich um Spezialtone, eventuell mit Farbzusatz, zum Färben von Keramiken und Dachziegeln durch Aufbrennen. Sie werden wetterbeständig und fest mit dem keramischen Grundmaterial verbunden und sollen den gleichen Ausdehnungskoeffizienten aufweisen, da sonst Rißbildungen zu befürchten sind.

Bei der Auswahl der Engoben muß daher außerordentlich sorgfältig vorgegangen werden.

Es ist ferner bekannt, Glasuren, d.h. im wesentlichen glasartige Stoffe, die aus Quarz, Tonerde, Alkalien, Erdalkalien und niedrigschmelzenden Oxiden als Flußmittel bestehen, als Überzugsmaterial für keramische Formkörper, insbesondere plattenförmige keramische Formkörper, zu verwenden. Hier tritt ebenfalls das Problem auf, daß man bei der Auswahl der entsprechenden Glasurmaterialien sehr sorgfältig vorgehen muß, um spätere Rißbildungen zu vermeiden.

Beiden Arten von Überzügen ist aber gemeinsam, daß sich bei Abrieb das Erscheinungsbild der mit ihnen überzogenen karamischen Formkörper ändert, so daß je nach Ausmaß der Abnutzung früher oder später ein vergleichsweise unschönes flächiges Erscheinungsbild zutage tritt.

Dies gilt umso mehr, als eine Übereinstimmung in der Farbgebung zwischen Engobe bzw. Glasur und dem von ihnen abgedeckten keramischen Grundkörper in der Praxis praktisch nicht erzielbar ist.

Hier will die Erfindung Abhilfe schaffen und bringt ein Verfahren in Vorschlag, mit dessen Hilfe aus gebranntem keramischen Material bestehende Formkörper, insbesondere Platten, herstellbar sind, bei denen trotz Abriebs der Oberfläche das Erscheinungsbild grundsätzlich erhalten bleibt, ein fleckiges Aussehen also vermieden werden kann. Dies gilt insbesondere dann, wenn ein Erescheinungsbild, wie es bei unglasierten keramischen Formkörpern vorhanden ist, gewünscht wird, trotzdem aber ein Oberflächenschutz vonnöten ist.

Diese der Erfindung zugrundeliegende Aufgabe wird dadurch gelöst, daß auf die Sichtseite des Formkörpers vor dem Brand ein in fließfähiger Form vorliegender Überzug aus dem Versatzmaterial des Formkörpers, das in einer Mühle verschlickert worden ist, aufgebracht wird.

Das Aufbringen dieses Materials läßt sich mit einer üblichen Glasurschleuder vornehmen, die beispielsweise bei der Herstellung von plattenförmigen Formkörpern im Strangpreßverfahren dem Strangpreßnumdstück, spätestens jedoch vor dem Eintritt des plattenförmigen Gutes in den Brennofen, nachgeordnet ist.

Sollten bei der Strangpreßherstellung von plattenförmigen keramischen Formkörpern auf deren Oberfläche streifenförmige oder fleckenförmige farbliche Unterschiede in Erscheinung treten, dann ist durch den gemäß der Erfindung vorgesehenen Überzug aus dem Versatzmaterial des Formkörpers eine ausreichende Überdeckung gewährleistet, die eine Unregelmäßigkeit im Erscheinungsbild auch dann nicht aufkommen läßt, wenn eine derart gebildete Oberfläche des keramischen Körpers durch Abrieb entsprechend beeinflußt wird.

In der DE—A 32 012 45 wird im Zusammenhang mit einem Verfahren zum Herstellen von unglasierten Fliesen im Trockenpreßverfahren mit einem Dekorationsmasseauftrag an der Oberfläche, bei dem eine Suspension der Dekormasse vor dem Ende des Preßvorganges aufgebracht und anschließend mitgepreßt wird, auch von einem aus der DE—A 25 50 474 bekannten Verfahren berichtet, bei dem als Dekormasse "Phorphyr" verwendet wird, d.h. ein durchgehender Belag von im wesentlichen gleicher mineralogischer Zusammensetzung wie derjenigen der Grundmasse, aber grober Körnung, so daß die verschiedenen Körner nebeneinander sichtbar sind.

Bei diesen beiden bekannten Verfahren bzw. den nach ihnen hergestellten keramischen Formkörpern liegt jedoch eine ganz andere Aufgabenstellung zugrunde. Es soll nicht, wie beim Erfindungsgegenstand, erreicht werden, daß sich trotz des unvermeidbaren Abriebs der Oberfläche das Erscheinungsbild der Oberfläche des Formkörpers nicht ändert, sondern es soll die Dekortechnik um ein weiteres Verfahren bereichert werden, das neue Oberflächengestaltungen ermöglicht. Ob die derart an der Oberfläche dekorierten Formkörper bei Abrieb ein unschönes Aussehen erhalten, ist nicht untersucht worden und ist auch nicht erkennbar.

Im Rahmen der Erfindung liegt es, dem den Überzug bildenden Versatzmaterial im Zuge der Verschlickerung Verflüssigungsmittel zuzusetzen.

Zweckmäßig erfolgt der Auftrag derart, daß der Überzug eine Schichtdicke von ca. 60—70 μm aufweist.

Wird in weiterer Ausbildung der Erfindung das zu verschlickernde Versatzmaterial soweit aufgemahlen, daß das in ihm vorhandene gröbste Korn um ein Mehrfaches feiner als das gröbste Korn des Versatzmaterials ist, aus dem der Formkörper besteht, dann weist der Formkörper eine praktisch völlig fleckensichere Oberfläche auf, d.h. es können sogar unbeabsichtigte Verschmutzungen selbst durch Tinten oder ähnliche färbende Substanzen wieder entfernt werden, ohne daß Spuren zurückbleiben.

**Patentansprüche**

1. Verfahren zur Herstellung eines auf seiner Sichtseite fleckensicheren, insbesondere plattenförmigen Formkörpers aus gebranntem keramischen Material, dadurch gekennzeichnet, daß auf die Sichtseite des Formkörpers vor dem Brand ein in fließfähiger Form vorliegender Überzug aus dem Versatzmaterial des Formkörpers, das in einer Mühle verschlickert worden ist, aufgebracht wird.

2. Verfahren nach Anspruch 1, dadurch gekennzeichnet, daß dem den Überzug bildenden Versatzmaterial im Zuge der Verschlickerung Verflüssigungsmittel zugesetzt wird.

3. Verfahren nach Anspruch 1 oder 2, dadurch gekennzeichnet, daß der Überzug in einer Schichtdicke von 60—70 µm aufgebracht wird.

4. Verfahren nach einem oder mehreren der vorhergehenden Ansprüche, dadurch gekennzeichnet, daß das zu verschlickernde Versatzmaterial soweit aufgemahlen wird, daß das in ihm vorhandene gröbste Korn um ein Mehrfaches feiner als das gröbste Korn des Versatzmaterials des Formkörpers ist.

5. Nach dem Verfahren nach einem oder mehreren der vorhergehenden Ansprüche flekkensicher gemachter Formkörper, insbesondere keramische Platte.

**Revendications**

1. Procédé permettant la fabrication d'un objet en matériau céramique cuit, particulièrement en forme de plaque, résistant aux tâches sur sa face apparente caractérisé par le fait que, sur le côté apparent de l'objet, avant la cuisson, on apporte sous forme fluide une couche du matériau constitutif de l'objet; cet apport aura au préalable été moulé sous forme de pâte dans un broyeur malaxeur.

2. Procédé conforme à la revendication 1, caractérisé par le fait que, un agent fluidisant est ajouté au matériau de base constituant la couche, pendant la phase de moulage, sous forme de pâte.

3. Procédé conforme aux revendications 1 ou 2 caractérisé par le fait que la couche présente une épaisseur de 60—70 microns.

4. Procédé conforme à une ou plusieurs des revendications précédentes, caractérisé par le fait que le matériau constitutif à mouler sous forme de pâte est broyé de telle façon que la plus grosse granulation qu'il présente soit plusieurs fois plus fine que la plus grosse granulation du matériau constitutif de l'objet à recouvrir.

5. Objet rendu résistant aux tâches, en particulier une plaque céramique, réalisée selon le procédé objet de l'une ou plusieurs des revendications précédentes.

**Claims**

1. Method for producing an in particular tile-shaped formed body of fired ceramic material which is stain-proof on its visible side, characterized in that a coating existing in flowable form which is made of the batch material of the formed body which has been slipped in a mill is applied to the visible side of the formed body before firing.

2. Method according to claim 1, characterized in that in the course of slipping a liquefying agent is added to the batch material forming the coating.

3. Method according to claim 1 or 2, characterized in that the coating is applied at a layer thickness of 60 to 70 µm.

4. Method according to one or more of the preceding claims, characterized in that the batch material to be slipped is ground up to such an extent that the coarsest grain contained therein is several times finer than the coarsest grain of the batch material of the formed body.

5. Formed body, in particular ceramic plate, rendered stain-proof by the method according to one or more of the preceding claims.